(19) Europäisches Patentamt
European Patent Office
Office européen des brevets

(11) Veröffentlichungsnummer: **0 263 782**
**B1**

(12) # EUROPÄISCHE PATENTSCHRIFT

(45) Veröffentlichungstag der Patentschrift: **27.12.90**

(51) Int. Cl.⁵: **C07C 69/753,** C07C 67/14, C08F 120/68

(21) Anmeldenummer: **87810449.6**

(22) Anmeldetag: **05.08.87**

(54) **Ester der Allyl-bicyclo [2.2.1]-hept-5-en-2-carbonsäure und deren Polymere.**

(30) Priorität: **11.08.86 CH 3214/86**

(43) Veröffentlichungstag der Anmeldung: **13.04.88 Patentblatt 88/15**

(45) Bekanntmachung des Hinweises auf die Patenterteilung: **27.12.90 Patentblatt 90/52**

(84) Benannte Vertragsstaaten: **CH DE FR GB IT LI NL SE**

(56) Entgegenhaltungen:
**US-A- 3 287 395**
**US-A- 3 658 669**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel(CH)**

(72) Erfinder: **Kramer, Andreas, Dr., Bundtels, CH-3186 Düdingen(CH)**

**EP 0 263 782 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft mit Allyl oder Methallyl und gegebenenfalls Methyl substituiertes Bicyclo[2.2.1]hept-5-en-2-carbonsäureester mit 2- bis 20-wertigen Polyolen, deren Herstellung, die daraus erhältlichen vernetzten Polymere sowie die Verwendung dieser Polymere als Giessharze, Matrixharze, Klebstoffe, Umhüllungsharze, Isolierstoffe für Elektronik und Elektrotechnik und im Oberflächenschutz.

Derivate der Allyl-bicyclo[2.2.1l]hept-5-en-2,3-dicarbonsäure sind bekannt. So beschreibt die EP-A 105,024 Imide dieser Dicarbonsäure sowie die Polymeren, die durch thermische Polymerisation der Monomeren gewonnen werden können. Die polymeren Produkte eignen sich z.B. als Matrixharze für Verbundwerkstoffe oder als Isoliermaterialien.

Derivate der Allyl-bicyclo[2.2.1]hept-5-en-2-carbonsäure sind von A.G. Gonzalez et al. in Tetrahedron Lett. 25(25), 2697-2700 (1984) beschrieben worden. Diese Verbindungen besitzen neben der Allyl- und Carbonsäurefunktion noch eine Hydroxylgruppe oder ein Chloratom in 7-Position. Die Arbeit betrifft die Synthese stereospezifisch 7,7-difunktionalisierter Derivate des Bicyclo[2.2.1]hepten Systems.

In der US 3,658,669 werden verschiedene Derivate, unter anderem auch Ester, substituierter, den Bicyclo[2.2.1]heptenrest enthaltender Carbonsäuren beschrieben.

Die US 3,287,395 beschreibt Diels-Alder Umsetzungsprodukte alkenylsubstituierter Cyclopentadiene mit α,β-ungesättigten Carbonsäuren, insbesondere Dicarbonsäuren, sowie die Verwendung dieser Produkte, zusammen mit anderen ungesättigten Dicarbonsäuren, wie z.B. Maleinsäure, und mit Diolen, für die Herstellung ungesättigter Polyester.

Die erfindungsgemässen allyl- oder methallyl-substituierten Bicyclo[2.2.1]hept-5-en-2-carbonsäureester sind wertvolle Ausgangsprodukte für Polymere mit ausgezeichneten Eigenschaften. Sie sind durch die folgende Formel I gekennzeichnet:

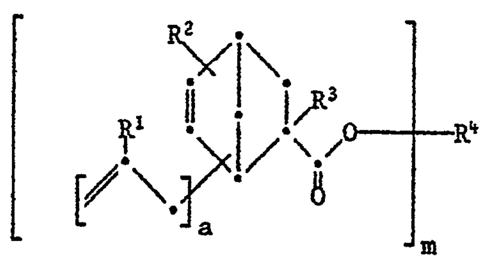

(I),

worin $R^1$, $R^2$ und $R^3$ unabhängig voneinander Wasserstoff oder Methyl bedeuten, a 1, 2, oder 3 und m eine ganze Zahl von 2 bis 20 sind, und $R^4$ einen m-wertigen Rest eines aliphatischen, oder eines ein-oder mehrkernigen cycloaliphatischen oder aromatischen Polyols oder eines Novolaks nach dem Entfernen von m Hydroxylgruppen darstellt, oder für einen Alkylenglykol- oder Polyalkylenglykolrest nach dem Entfernen von 2 Hydroxylgruppen steht, wobei pro Kohlenstoffatom im Rest $R^4$ nicht mehr als eine C-O Bindung vorliegt.

Vorzugsweise bedeutet a die Zahl 1 und $R^1$, $R^2$ und $R^3$ sind Wasserstoff.

$R^4$ bedeutet vorzugsweise einen Rest eines aromatischen Polyols oder eines Novolaks.

Bevorzugte Verbindungen der Formel I sind auch solche, worin m eine ganze Zahl von 2 bis 5 ist und $R^4$ für einen m-wertigen $C_2$-$C_{20}$-aliphatischen, einen ein- oder mehrkernigen $C_5$-$C_{20}$-cycloaliphatischen, oder einen $C_6$-$C_{20}$-aromatischen oder araliphatischen Rest, einen Rest der Formel

$$-CH_2CH_2-\left[-OCH_2CH_2-\right]_n \quad \text{oder der Fomel}$$

$$-CH_2CH_2CH_2-\left[-OCH_2CH_2CH_2-\right]_n$$

mit n gleich eine ganze Zahl von 1 bis 10, vorzugsweise 1 bis 5, oder einen m-wertigen Rest der Formel II darstellt

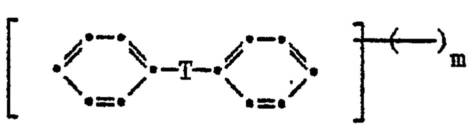

(II),

worin T Methylen, Isopropyliden, CO, O, S oder $SO_2$ bedeutet.

Die Reste $R^4$ können auch noch freie, nicht veresterte Hydroxylsubstituenten aufweisen, wobei pro Kohlenstoffatom im Rest $R^4$ höchstens eine C-O Bindung bzw. Hydroxylgruppe vorliegen kann. Hydroxylgruppenfreie Reste $R^4$ sind aber bevorzugt.

Wenn $R^4$ ein m-wertiger $C_2$-$C_{20}$-aliphatischer Rest ist, kann dieser geradkettig oder verzweigt sein. Falls $R^4$ einen ein- oder mehrkernigen $C_5$-$C_{20}$-cycloaliphatischen Rest darstellt, kann es sich dabei um mono-, bi- oder auch polycyclische Systeme handeln, welche, falls erwünscht, mit bis zu zwei $C_1$-$C_5$-Alkyl substituiert sein können. Die Hydroxylgruppen des Polyols können auch über $C_1$-$C_5$-Alkylengruppen, wie z.B. Methylen, an den cycloaliphatischen Rest gebunden sein.

Beispiele für geeignete aliphatische Reste $R^4$ sind Ethylen, 1,2- und 1,3-Propylen, Butylen, Penta- und Hexamethylen, Heptylen, Octylen, Decylen, Dodecylen, Hexadecylen, Neopentylen sowie Reste von Glycerin, von 1,1,1-Tris(hydroxymethyl)propan und von Pentaerythrit [2,2-Bis(hydroxymethyl)-1,3-propandiol].

Beispiele für geeignete ein- oder mehrkernige cycloaliphatische Reste $R^4$ sind Cyclopentylen, Cyclohexylen, Cycloheptylen, Cyclooctylen, Bis(cyclohexylen)methan, 2,2-Bis(cyclohexylen)propan, Decalinylen, Bicyclo[2.2.1]heptylen, Bicyclo[2.2.2]-octylen, Tricyclo[5.2.1.0 $^{2,6}$]decylen und die enspre-chenden $C_1$-$C_5$-alkyl substituierten Derivate, oder Reste von Polyolen, in denen die Hydroxygruppen über $C_1$-$C_5$-Alkylengruppen an den cycloaliphatischen Rest gebunden sind, nach dem Entfernen der Hydroxylgruppen.

Wenn $R^4$ ein ein- oder mehrkerniger $C_6$-$C_{20}$-aromatischer Rest ist, können die mehrkernigen Systeme auch kondensierte Ringe aufweisen.

Bevorzugte Verbindungen der Formel I sind auch solche, worin $R^4$ einen m-wertigen Rest eines Phenol- oder Cresolnovolaks nach dem entfernen von m Hydroxylgruppen darstellt.

Erfindungsgemässe Verbindungen der Formel I umfassen auch Strukturen, bei denen der Rest $R^4$ von halogenatome-enthaltenden, besonders von chlor- und bromhaltigen Polyolen oder Novolaken abgeleitet ist.

Beispiele für geeignete aromatische Reste $R^4$ sind 1,3- oder 1,4-Phenylen oder Naphthylen, sowie Reste, die von Bisphenol A oder Bisphenol F abgeleitet sind.

Besonders bevorzugte Verbindungen der Formel I sind solche, worin m die Zahl 2 bedeutet, $R^4$ für eine Gruppe $-C_pH_{2p}-$ mit p gleich eine ganze Zahl von 2 bis 15, einen $C_5$-$C_{12}$-cycloaliphatischen Rest, einen $C_6$-$C_{12}$-aromatischen Rest oder einen Rest der Formel II steht.

Ganz besonders bevorzugte Verbindungen der Formel I sind solche, worin der Rest $R^4$ von einem Polyol ausgewählt aus der Gruppe bestehend aus

$HO(CH_2)_6OH$, $HO(CH_2)_{12}OH$, 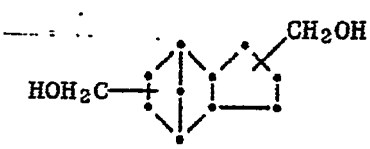 , 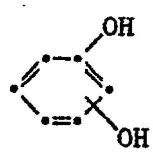 ,

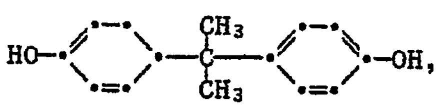 , 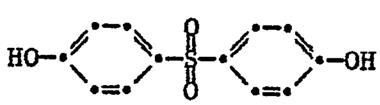 ,

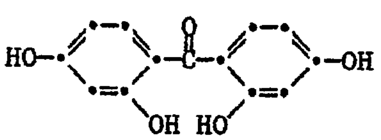 , 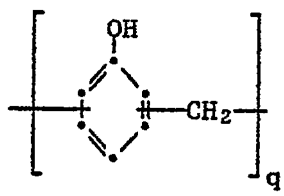 und

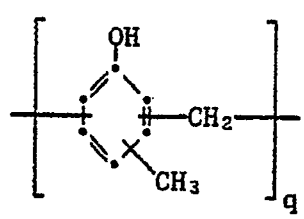 ,

wobei q eine ganze Zahl von 3 bis 20 ist, abgeleitet wird.

Am meisten bevorzugt ist die Verbindung der Formel I, worin a die Zahl 1, m die Zahl 2, $R^1$, $R^2$ und $R^3$ Wasserstoff und $R^4$

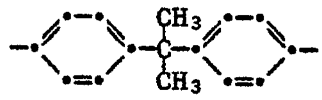

bedeuten.

Die erfindungsgemässen Verbindungen der Formel I können auf an sich bekannte Weise, z.B. durch Umsetzung eines Säurechlorids der Formel III

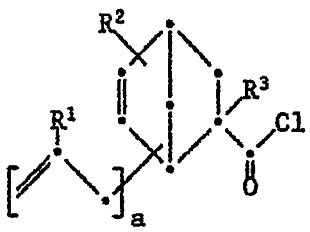

(III)

mit einem Polyol der Formel IV

$R^4(OH)_m$ (IV)

in Gegenwart von mindestens der dem Säurechlorid äquivalenten Menge eines tertiären Amins oder eines Alkalimetallcarbonats hergestellt werden, wobei die Reste $R^1$, $R^2$, $R^3$ und $R^4$, sowie a und m die unter Formel I angegebene Bedeutung haben. Die Umsetzung kann ohne Lösungsmittel oder bevorzugt in Gegenwart eines inerten aprotischen Lösungsmittels, wie z.B. Chloroform, Methylenchlorid, Diethylether, Dioxan, Toluol, Xylol oder Hexan, erfolgen. Als Basen für die Neutralisierung des freiwerdenden Chlorwasserstoffs sind tertiäre Amine, wie z.B. Triethylamin oder Pyridin, oder Alkalimetallcarbonate, z.B. Natrium- oder Kaliumcarbonat geeignet. Die Temperatur der Umsetzung kann zwischen 0 und etwa 150°C liegen. Bevorzugt werden die erfindungsgemässen Ester so hergestellt, dass die Edukte bei Raumtemperatur oder unter Kühlung zusammengeführt werden, und das Reaktionsgemisch dann unter Temperaturerhöhung auf ca. 50 bis 100°C nachgerührt wird. Die Umsetzung erfolgt bevorzugt unter Einsatz stöchiometrischer Mengen der Edukte, so dass pro Hydroxyäquivalent des Polyols IV ein Mol des Säurechlorids III verwenet wird; man kann aber nach einen bis zu 30 %igen Ueberschuss eines der Edukte, besonders des Säurec hlorids, verwenden.

Die Säurechloride der Formel III können in Analogie zu dem in der US Patentschrift 3,105,839 beschriebenen Verfahren hergestellt werden, indem man Natrium-Cyclopentadienid oder Natrium-Methylcyclopetadienid mit einem Allyl- oder Methallylhalogenid umsetzt, worauf sich eine Diels-Alder Reaktion mit Acryl- bzw. Methacrylsäurechlorid anschliesst.

Polyole der Formel IV sind bekannt oder können auf an sich bekannte Weise hergestellt werden.

Die erfindungsgemässen Verbindungen der Formel I sind flüssige oder niederschmelzende feste Stoffe und sind in organischen Lösungsmitteln gut löslich. Sie lassen sich thermisch in unlösliche vernetzte Polymere mit wertvollen physikalischen Eigenschaften überführen. Bei der Polymerisation entstehen keine flüchtigen Komponeten, was für viele Anwendungen, beispielsweise die Herstellung von Lackfilmen oder beim Einsatz als Matrixharze, von Vorteil ist.

Die Erfindung betrifft daher auch Polymere, die dadurch erhältlich sind, dass man eine Verbindung der Formel I oder ein Gemisch solcher Verbindungen während 5 bis 30, vorzugsweise während 10 bis 25 Stunden, auf eine Temperatur zwischen 150 und 300°C, insbesondere zwischen 180 und 250°C, erhitzt.

Ein Polymer mit besonders vorteilhaften Eigenschaften wird erhalten, wenn man eine Verbindung der Formel I, worin a die Zahl 1, m die Zahl 2, $R^1$, $R^2$ und $R^3$ Wasserstoff und $R^4$

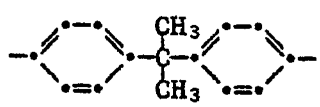

bedeuten, während 10 bis 25 Stunden auf eine Temperatur zwischen 180 und 250°C erhitzt.

Die erfindungsgemässen Verbindungen können direkt verwendet und polymerisiert werden, oder sie können zunächst in einem organischen Lösungsmittel, wie Toluol, Xylol, Methylethylketon, Ethylenglykoldialkylethern mit 1-4 C-Atomen in den Alkylgruppen oder einem ähnlichen, in der Lackindustrie üblichen

Lösungsmittel, gelöst werden. Solche Lösungen können als Imprägniermittel oder Beschichtungsmittel oder auch als Versandobjekt an den Verbraucher dienen. Bevorzugt erfolgt die Polymerisation der erfindungsgemässen Ester direkt ohne Einsatz von Lösungsmitteln.

Selbstverständlich können den Verbindungen der Formel I inerte und stabile Stoffe, wie Füllmittel, Pigmente, Farbstoffe und andere Additive, zugegeben werden, bevor sie zu vernetzten Gebilden polymerisiert werden.

Die polymeren Produkte können vielseitig angewendet werden, z.B. als Klebstoffe, sowie im Oberflächenschutz und als Umhüllungsharze und Isolierstoffe für Elektronik und Elektrotechnik und insbesondere als Giessharze oder Matrixharze für faserverstärkte Verbundstoffe. Die tiefe Schmelzviskosität ermöglicht ein imprägnieren der Fasern aus der Schmelze. Als Verstärkungsmittel eignen sich insbesondere Glas-, Kohlenstoff- und Polyamidfasern. Die Erfindung betrifft auch die Verwendung der polymeren Produkte für die oben erwähnten Zwecke.

Herstellungsbeispiele

Beispiel 1:Allylbicyclo[2.2.1]hept-5-en-2-carbonylchlorid

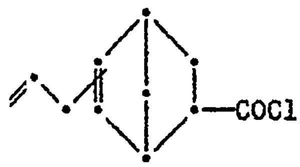

Eine Lösung von 400 g NaOH in 800 ml $H_2O$ und 16 g Benzyltriethylammoniumchlorid in 32 ml Ethanol wird auf 30-35°C erwärmt und unter Rühren innert 15 Minuten mit 264 g Cyclopentadien versetzt. Zur tiefroten klaren Emulsion tropft man innerhalb von 45 Minuten 336 g Allylchlorid. Es setzt unmittelbar eine Reaktion ein, die sich durch Wärmeentwicklung und Ausfällung von Natriumchlorid bemerkbar macht. Die Innentemperatur wird mit einem Eisbad zwischen 50° und 55°C gehalten. Sobald das Allylchlorid zugetropft ist, wird 30 Minuten bei 50°C nachgerührt. Die Reaktionslösung wird abgekühlt und mit 200 ml Wasser versetzt. Dabei geht das ausgefallene Salz in Lösung. Die wässerige Phase wird abgetrennt, die organische Phase zweimal mit gesättigter NaCl-Lösung gewaschen und über Natriumsulfat filtriert. Das nicht umgesetzte Cyclopentadien und Allylchlorid werden bei Raumtemperatur und reduziertem Druck abdestilliert. Diese R einigungsoperation wird abgebrochen sobald ein absoluter Druck von 33 mbar erreicht wird. Die Analyse des Rückstandes durch Chromatographie zeigt, dass nebst Allylcyclopentadien (ca. 75 %) als Nebenprodukte noch Di- und Triallylcyclopentadien, Dicyclopentadien und Diallyldicyclopentadien vorhanden sind. 360 g rohes Allylcyclo pentadien werden in 400 ml Methylenchlorid aufgenommen. Zu dieser klaren rotbraunen Lösung tropft man innerhalb einer Stunde bei 20°-25°C unter Eiskühlung 252 g Acrylsäurechlorid und rührt anschliessend 2 Stunden bei 20°C. Die Reaktionslösung wird am Rotationsverdampfer eingeengt und der Rückstand bei einem absoluten Druck von 26 mbar destilliert. Zwischen 112°C und 120°C gehen 377 g Allyl-bicyclo[2.2.1]hept-5-en-2-carbonylchlorid über, was einer Ausbeute von 68 % der Theorie entspricht. Die gelbe Flüssigkeit kann unter Stickstoff längere Zeit bei 0°C gelagert werden. Zur Charakterisierung wird das Säurechlorid in den entsprechenden Methylester übergeführt.

Beispiel 2Hexamethylen-bis-(allyl-bicyclo[2.2.1]hept-5-en-2-carbonsäureester

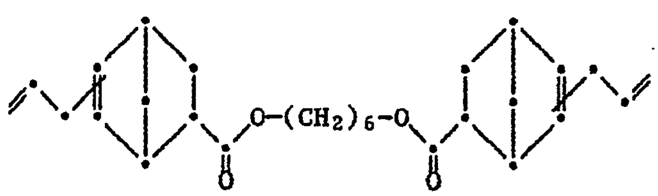

Zu einer Lösung von 15,1 g Hexandiol in 150 ml Pyridin werden bei 20°C innert 40 Minuten 58,9 g Allylbicyclo[2.2.1]hept-5-en-2-carbonylchlorid (hergestellt nach Beispiel 1) getropft. Anschliessend wird eine Stunde bei 80°C nachgerührt. Die Reaktionslösung wird agbekühlt, unter Rühren auf 1000 ml 2N HCl gegossen und zweimal mit je 250 ml Methylenchlorid extrahiert. Die vereinigten organischen Phasen werden mit 1 N HCl, wässeriger Sodalösung und gesättigter Natriumchloridlösung gewaschen, über Natriumsulfat getrocknet, filtriert und das Lösungsmitel wird bei 60°C am Rotationsverdampfer abdestilliert. Der Rückstand wird 2 Stunden im Vakuum bei 140°C getrocknet. Man erhält 55,7 g (99 % der Theorie) eines rotbraunen, flüssigen Harzes mit $\eta_{25}$=109 mPas. Durch Gelpermeationschromatographie (THF) ermittelt man ein Molekulargewicht von 449 ($\overline{M}_n$) bzw. von 455 ($\overline{M}_w$).

| Analyse | % C | % H |
|---|---|---|
| berechnet für $C_{28}H_{38}O_4$ | 76,68 | 8,73 |
| gefunden | 77,32 | 8,77 |

Beispiele 3 bis 10: Analog Beispiel 2 werden verschiedene Diole mit Allylbicyclo[2.2.1]hept-5-en-2-carbonylchlorid zu den entsprechenden Diestern umgesetzt. Die Ergebnisse sind in Tabelle 1 zusammengefasst.

Tabelle 1

| Beispiel | Diol | Ausbeute in % | Viskosität in mPas | Erweichungspunkt in °C | GPC* in THF $\bar{M}_n$ | $\bar{M}_w$ | Elementaranalyse (berechnete Werte) %C | %H |
|---|---|---|---|---|---|---|---|---|
| 3 | $HO(CH_2)_{12}OH$ | 82 | 145(25°C) | - | 583 | 594 | 78,09(78,12) | 9,48(9,64) |
| 4 | 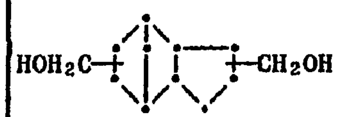 | 97 | 478(40°C) | - | 450 | 455 | 79,07(79,03) | 8,44(8,58) |
| 5 | 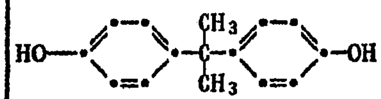 | 81 | 237(80°C) | - | 540 | 548 | 80,60(80,99) | 7,34(7,35) |
| 6 | 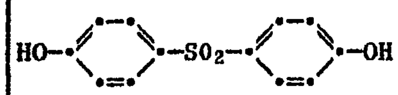 | 83 | 584(80°C) | - | 641 | 667 | 71,66(71,56) | 6,06(6,01) |
| 7 | 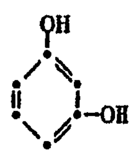 | 91 | 805(25°C) | - | 435 | 448 | 77,74(78,11) | 6,82(7,02) |
| 8 | 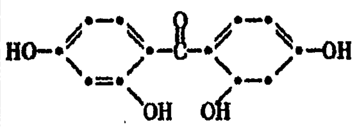 | 82 | 166(120°C) | - | 801 | 812 | 76,98(77,27) | 6,44(6,48) |

* Gelpermeationschromatographie

Tabelle 1 (Fortsetzung)

| Beispiel | Diol | Ausbeute in % | Viskosität in mPas | Erweichungspunkt in °C | GPC* in THF $\bar{M}_n$ | $\bar{M}_w$ | Elementaranalyse (berechnete Werte) %C | %H |
|---|---|---|---|---|---|---|---|---|
| 9 | Phenolnovolack 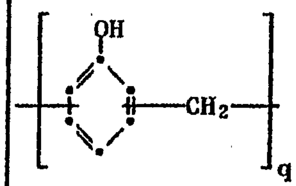 $\bar{M}_n$ =401 $\bar{M}_w$ =518 | 87 | 1070(80°C) | - | 818 | 1351 | 80,37(81,17) | 6,80(6,81) |
| 10 | Kresolnovolack 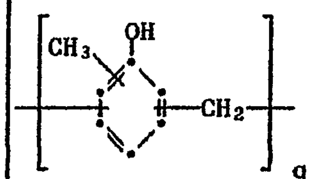 $\bar{M}_n$ = 701 $\bar{M}_w$ = 945 | 97 | - | 60 | 1221 | 1850 | 80,91(81,39) | 7,13(7,19) |

* Gelpermeationschromatographie

Beispiel 11:Bisphenol-A-bis-(methallyl-methyl-bicyclo[2.2.1]hept-5-en-2-carbon äureester)

a)

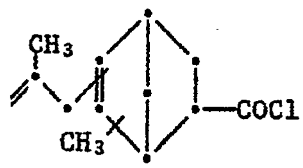

b)

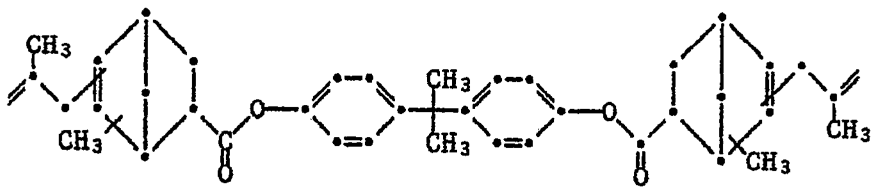

a) Ersetzt man Cyclopentadien und Allylchlorid durch Methylcyclopentadien und Methyallylchlorid und geht im übrigen in gleicher Weise wie in Beispiel 1 beschrieben vor, so erhält man Methallyl-methyl-bicyclo[2.2.1]hept-5-en-2-carbonylchlorid.

b) Zu einer Lösung von 87 g Bisphenol-A in 300 ml Pyridin werden bei 20°C innert 30 Minuten 175 g Methallyl-methyl-bicyclo[2.2.1]hept-5-en-2-carbonylchlorid getropft. Anschliessend wird eine Stunde bei 80°C nachgerührt und dann wie in Beispiel 2 beschrieben aufgearbeitet. Man erhält 205 g (89 % der Theorie) eines braunen, flüssigen Harzes mit $\eta_{120} = 640$ mPas. Durch Gelpermeationschromatographie (THF) ermittelt man ein Molekulargewicht von 616 ($\overline{M}_n$) bzw. 656 ($\overline{M}_w$).

| Analyse: | % C | % H |
|---|---|---|
| berechnet für $C_{41}H_{48}O_4$ | 81,42 | 8,00 |
| gefunden | 80,65 | 8,04 |

Beispiel 12:Bisphenol-A-bis-(allyl-bicyclo[2.2.1]hept-5-en-2-methyl-2-carbonsä reester).

a)

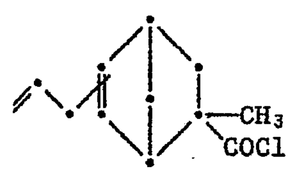

b)

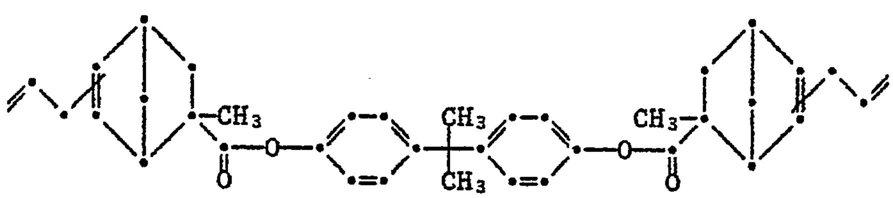

a) Das gemäss Beispiel 1 hergestellte Allylcyclopentadien wird anstelle mit Acrylsäurechlorid mit Methacrylsäurechlorid auf die im Beispiel 1 beschriebene Art umgesetzt, um Allyl-bicyclo[2.2.1]hept-5-en-2-methyl-2-carbonylchlorid zu ergeben.

b) Zu einer Lösung von 114 g Bisphenol-A in 350 ml Pyridin werden bei 20°C innert 40 Minuten 211 g Allyl-bicyclo[2.2.1]hept-5-en-2-methyl-2-carbonylchlorid getropft. Anschliessend wird eine Stunde bei 80°C nachgerührt und dann wie in Beispiel 2 beschriebennn aufgearbeitet. Man erhält 251 g (87 % der Theorie) eines zähflüssigen, rotbraunen Harzes mit $\eta_{120°} = 380$ mPas. Durch Gelpermeationschromatographie (THF) ermittelt man ein Molekulargewicht von 675 ($\overline{M}_n$) bzw. 1183 ($\overline{M}_w$).

| Analyse: | % C | % H |
|---|---|---|
| berechnet für $C_{39}H_{44}O_4$ | 81,21 | 7,69 |
| gefunden | 80,51 | 7,55 |

Beispiel 13:Bisphenol-A-bis-(diallyl-bicyclo[2.2.1]hept-5-en-2-carbonsäureeste ).

a) 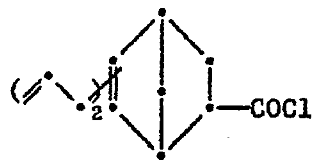

b) 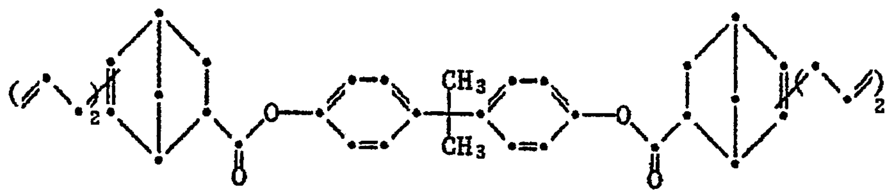

a) Unter den gleichen Reaktionsbedingungen wie in Beispiel 1 tropft man zu 300 g NaOH in 600 ml $H_2O$ und 12 g Benzyltriethylammoniumchlorid (gelöst in 24 ml Ethanol), 132 g Cyclopentadien und 321 g Allylchlorid. Nach dem Zutropfen rührt man 2 Stunden bei 65°C. Das gebildete Salz wird durch Zusatz von Wasser aufgelöst und die Phasen getrennt. Die organische Phase wird zweimal mit gesättigter NaCl-Lösung gewaschen und über Natriumsulfat filtriert. Die Destillation des rotbraunen Filtrates im Vakuum ergibt 135 g Diallylcyclopentadien; Sdp: 70-82°C bei 20 mm.

| Analyse (Diallylcyclopentadien): | % C | % H |
|---|---|---|
| berechnet für $C_{11}H_{14}$ | 90,35 | 9,65 |
| gefunden | 90,18 | 9,61 |

81 g Diallylcyclopentadien werden in 200 ml Methylenchlorid gelöst. Zu dieser Lösung tropft man innerhalb 30 Minuten bei 20°C unter Eiskühlung 45 g Acrylsäurechlorid und rührt anschliessend eine Stunde bei Raumtemperatur. Die Destillation des Reaktionsproduktes ergibt 84,4 g (73 % der Theorie) Diallylbicyclo[2.2.1]hept-5-en-2-carbonylchlorid; Sdp.= 125-134°C bei 20 mm.

| Analyse: | % Cl |
|---|---|
| berechnet für $C_{14}H_{17}ClO$ | 14,98 |
| gefunden | 14,10 |

b) Zu einer Lösung von 62,7 g Bisphenol-A in 200 ml Pyridin werden bei 20°C innert 30 Minuten 130 g Diallyl-bicyclo[2.2.1]hept-5-en-2-carbonsäurechlorid getropft. Anschliessend wird eine Stunde bei 80°C nachgerührt und dann wie in Beispiel 2 beschrieben aufgearbeitet. Man erhält 162 g (95 % der Theorie) eines braunen, flüssigen Harzes mit $\eta_{25}$ = 3165 mPas. Durch Gelpermeationschromatographie (THF) ermittelt man ein Molekulargewicht von 610 ($\overline{M}_n$) bzw. 691 ($\overline{M}_w$).

| Analyse: | % C | % H |
|---|---|---|
| berechnet für $C_{43}H_{48}O_4$ | 82,13 | 7,69 |
| gefunden | 81,63 | 7,85 |

Anwendungsbeispiele

Beispiel A: Den gemäss Beispiel 2 hergestellten Diester giesst man als heisses, dünnflüssiges Harz in ein Reagenzglas und härtet 3 Stunden bei 200°C, 3 Stunden bei 220°C und 12 Stunden bei 250°C. Man erhält einen klaren Festkörper mit einer Glasumwandlungstemperatur von 135°C.

Beim Verkleben von Aluminiumblech unter den gleichen Härtungsbedingungen, wobei die beiden zu verklebenden Bleche sich mit 25 x 12 $mm^2$ überlappen, erhält man eine Zugscherfestigkeit nach ISO 4587 (Messung bei Raumtemperatur) von 10,9 $N/mm^2$.

Beispiel B: Den gemäss Beispiel 5 hergestellten Diester giesst man als heisses, dünnflüssiges Harz in eine Stahlform von 8 x 6 x 0,4 $cm^3$ und härtet 4 Stunden bei 180°C, 5 Stunden bei 200°C und 10 Stunden

bei 220°C. Nach dem Abkühlen schneidet man Prüfstäbe aus der klaren, rotbraunen Platte. Folgende Eigenschaften werden daran gemessen:
Schlagbiegefestigkeit nach VSM 77105 = 9,6 kJ/m²
Glasumwandlungstemperatur Tg (gemessen mit TA 2000)[1] = 184°C
10 % Gewichtsverlust[2] = 405°C
Zugscherfestigkeit (ISO 4587) = 7,4 N/mm²

[1] TA-2000 = Differentialthermoanalysesystem TA 2000 der Firma Mettler AG, Greifensee, CH.
[2] Messung durch Aufheizen einer Probe in TA 2000; Ermittlung der Temperatur, bei der 10 % der Probe verflüchtigt sind; Aufheizgeschwindigkeit 4°C/Min (in Luft).

Beispiel C: Der gemäss Beispiel 7 hergestellte Diester wird im Reagenzglas 4 Stunden bei 180°C, 5 Stunden bei 200°C und 10 Stunden bei 220°C gehärtet. Man erhält einen klaren, transparenten Festkörper mit einer Glasumwandlungstemperatur von 231°C.

Beispiel D: Der gemäss Beispiel 10 hergestellte Diester wird in eine Stahlform von 8 x 6 x 0,4 cm³ gegossen und wie in Beispiel B gehärtet.
Schlagbiegefestigkeit (VSM 77105) = 4,9 kJ/m²
Glasumwandlungstemperatur Tg = 305°C
10 % Gewichtsverlust = 438°C.

## Patentansprüche

1. Verbindungen der Formel I

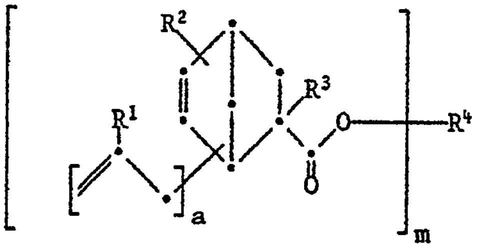

(I),

worin $R^1$, $R^2$ und $R^3$ unabhängig voneinander Wasserstoff oder Methyl bedeuten, a 1, 2 oder 3 und m eine ganze Zahl von 2 bis 20 sind, und $R^4$ einen m-wertigen Rest eines aliphatischen, oder eines ein- oder mehrkernigen cycloaliphatischen oder aromatischen Polyols oder eines Novolaks nach dem Entfernen von m Hydroxylgruppen darstellt, oder für einen Alkylenglykol- oder Polyalkylenglykolrest nach dem Entfernen von 2 Hydroxylgruppen steht, wobei pro Kohlenstoffatom im Rest $R^4$ nicht mehr als eine C-O Bindung vorliegt.

2. Verbindungen der Formel I nach Anspruch 1, worin $R^1$, $R^2$ und $R^3$ Wasserstoff sind und a 1 ist.

3. Verbindungen der Formel I nach Anspruch 1, worin $R^4$ einen Rest eines aromatischen Polyols oder eines Novolaks darstellt.

4. Verbindungen der Formel I nach Anspruch 1, worin m eine ganze Zahl von 2 bis 5 ist und $R^4$ für einen m-wertigen $C_2$-$C_{20}$-aliphatischen, einen ein- oder mehrkernigen $C_5$-$C_{20}$-cycloaliphatisschen, oder einen $C_6$-$C_{20}$-aromatischen Rest, einen Rest der Formel

$$-CH_2CH_2-[-OCH_2CH_2-]_n \quad \text{oder der Fomel}$$

$$-CH_2CH_2CH_2-[-OCH_2CH_2CH_2-]_n$$

mit n gleich eine ganze Zahl von 1 bis 10 steht, oder einen m-wertigen Rest der Formel II darstellt

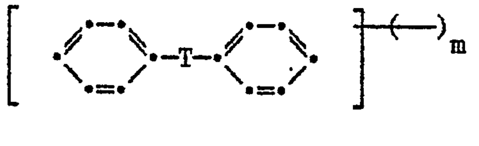

(II),

worin T Methylen, Isopropyliden, CO, O, S oder $SO_2$ bedeutet.

5. Verbindungen der Formel I nach Anspruch 1, worin $R^4$ einen m-wertigen Rest eines Phenol- oder Cresolnovolaks nach dem Entfernen von m Hydroxylgruppen darstellt.

6. Verbindungen der Formel I nach Anspruch 4, worin m 2 ist und $R^4$ -C $_pH_{2p}$- mit p gleich eine ganze Zahl von 2 bis 15, ein $C_5$-$C_{12}$ cycloaliphatischer Rest, ein $C_6$-$C_{12}$-aromatischer Rest oder ein Rest der Formel II ist.

7. Verbindungen der Formel I nach Anspruch 1, worin $R^4$ von einem Polyol ausgewählt aus der Gruppe bestehend aus

$HO(CH_2)_6OH$, $HO(CH_2)_{12}OH$, 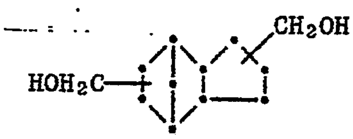 , 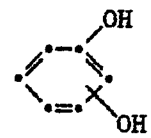 ,

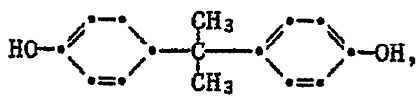 , 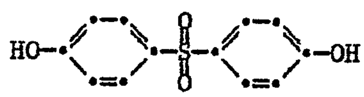 ,

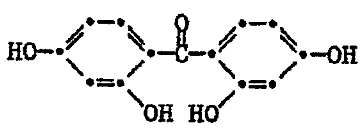 , 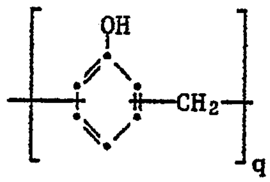 und

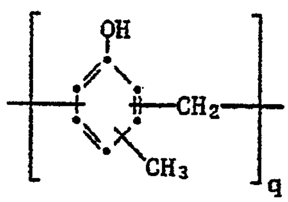 ,

wobei q eine ganze Zahl von 3 bis 20 ist, abgeleitet wird.

8. Verfahren zur Hestellung von Verbindungen der Formel I nach Anspruch 1 durch Umsetzung eines Säurechlorids der Formel III

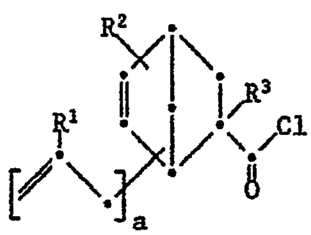 (III)

mit einem Polyol der Formel IV

$R^4(OH)_m$ (IV)

in Gegenwart von mindestens der dem Säurechlorid äquivalenten Menge eines tertiären Amins oder eines Alkalimetallcarbonats, wobei die Reste $R^1$, $R^2$, $R^3$ und $R^4$ sowie a und m die im Anspruch 1 angegebene Bedeutung haben.

9. Polymere, die dadurch erhältich sind, dass man eine Verbindung der Formel I nach Anspruch 1 oder ein Gemisch solcher Verbindungen während 5 bis 30 Stunden auf eine Temperatur zwischen 150 und 300°C erhitzt.

10. Polymere nach Anspruch 9, dadurch gekennzeichnet, dass man eine Verbindung der Formel I, worin a die Zahl 1, m die Zahl 2, $R^1$, $R^2$ und $R^3$ Wasserstoff und $R^4$

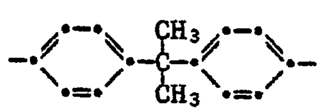

bedeuten, während 10 bis 25 Stunden auf eine Temperatur zwischen 180 und 250°C erhitzt.

## Claims

1. A compound of the formula I

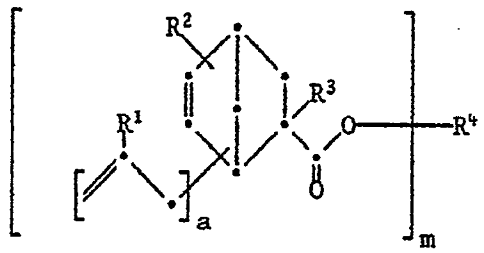 (I),

wherein $R^1$, $R^2$ and $R^3$ independently of one another are hydrogen or methyl, a is 1, 2 or 3 and m is an integer from 2 to 20, and $R^4$ is an m-valent radical of an aliphatic polyol or a mononuclear or polynuclear cycloaliphatic or aromatic polyol or of a novolak after removal of m hydroxyl groups, or is an alkylene glycol or polyalkylene glycol radical after removal of 2 hydroxyl groups, no more than one C–O bond being present per carbon atom in the radical $R^4$.

2. A compound of the formula I according to claim 1, wherein $R^1$, $R^2$ and $R^3$ are hydrogen and a is 1.

3. A compound of the formula I according to claim 1, wherein $R^4$ is a radical of an aromatic polyol or of a novolak.

4. A compound of the formula I according to claim 1, wherein m is an integer from 2 to 5 and $R^4$ is an m-valent $C_2$–$C_{20}$aliphatic, a mononuclear or polynuclear $C_5$–$C_{20}$-cycloaliphatic or a $C_6$–$C_{20}$aromatic radical, a radical of the formula

$-CH_2CH_2-\!\!\left[-OCH_2CH_2-\right]_n$ or of the formula

$-CH_2CH_2CH_2-\!\!\left[-OCH_2CH_2CH_2-\right]_n$

with n being an integer from 1 to 10, or is an m-valent of the formula II

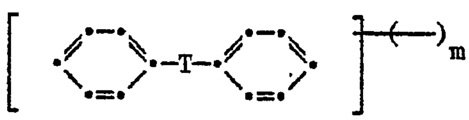 (II),

in which T is methylene, isopropylidene, CO, O, S or $SO_2$.

5. A compound of the formula I according to claim 1, wherein $R^4$ is an m-valent radical of a phenol or cresol novolak after removal of m hydroxyl groups.

6. A compound of the formula I according to claim 4, wherein m is 2 and $R^4$ is $-C_pH_{2p}-$ with p being an integer from 2 to 15, a $C_5$–$C_{12}$cycloaliphatic radical, a $C_6$–$C_{12}$aromatic radical or a radical of the formula II.

7. A compound of the formula I according to claim 1, wherein $R^4$ is derived from a polyol selected from the group comprising

$HO(CH_2)_6OH$, $HO(CH_2)_{12}OH$, 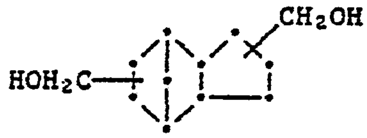 , 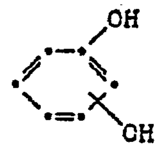 ,

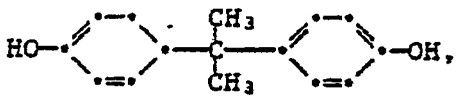 , 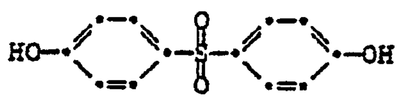 ,

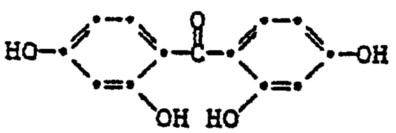 , 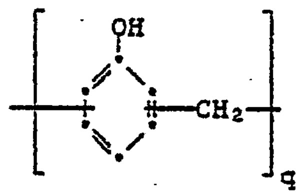 and

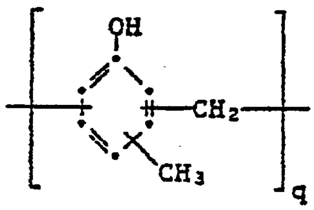 ,

q being an integer from 3 to 20.

8. A process for preparing a compound of the formula I according to claim 1 by reacting an acid chloride of the formula III

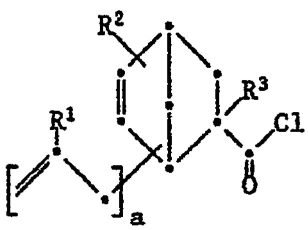 (III)

with a polyol of the formula IV

$R^4(OH)_m$ (IV)

in the presence of a quantity, at least equivalent to the acid chloride, of a tertiary amine or an alkali metal carbonate, the radicals $R^1$, $R^2$, $R^3$ and $R^4$ as well as a and m being as defined in claim 1.

9. A polymer, obtainable by heating a compound of the formula I according to claim 1 or a mixture of said compounds to a temperature of between 150 and 300°C for a period of 5 to 30 hours.

10. A polymer according to claim 9, obtained by heating a compound of the formula I, in which a is the number 1, m is the number 2, $R^1$, $R^2$ and $R^3$ are hydrogen and $R^4$ is

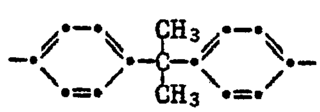

to a temperature of between 180 and 250°C for a period of 10 to 25 hours.

**Revendications**

1. Composés de formule I ci-dessous

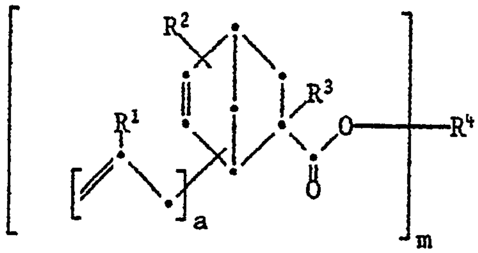

(I),

dans laquelle $R^1$, $R^2$, $R^3$ désignent chacun, indépendamment les uns des autres, l'hydrogène ou le groupe éthyle, a le nombre 1, 2 ou 3 et m un entier de 2 à 20, et $R^4$ est le radical de valence m d'un polyol aliphatique, d'un polyol cyclo-aliphatique monocyclique ou polycyclique ou d'un polyol aromatique, ou encore d'une novolaque dont ont été éliminés m groupes hydroxyliques, ou bien un radical d'alkylène glycol ou de polyalkylène glycol dont ont été éliminés deux groupes hydroxyliques, avec pas plus d'une liaison C–O par atome de carbone du radical $R^4$.

2. Composés de formule I selon la revendication 1 dans lesquels $R^1$, $R^2$, $R^3$ sont l'hydrogène et a le nombre 1.

3. Composés de formule I selon la revendication 1 dans lesquels $R^4$ est le radical d'un polyol aromatique ou d'une novolaque.

4. Composés de formule I selon la revendication 1 dans lesquels m est un entier de 2 à 5 et $R^4$ un radical de valence m aliphatique en $C_2$–$C_{20}$, cycloaliphatique en $C_5$–$C_{20}$, monocyclique ou polycyclique, ou araliphatique ou aromatique en $C_6$–$C_{20}$, ou encore un radical de formule

$$-CH_2CH_2-\left[-OCH_2CH_2-\right]_n$$

ou

$$-CH_2CH_2CH_2-\left[-OCH_2CH_2CH_2-\right]_n ,$$

n étant un entier de 1 à 10, de préférence de 1 à 5, ou un radical de valence m de formule II

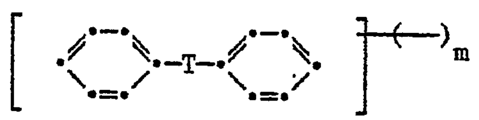

(II),

T désignant le groupe méthylène ou isopropylidène ou bien CO, O, S ou $SO_2$.

5. Composés de formule I selon la revendication 1 dans lesquels $R^4$ est un radical de valence m d'une novolaque de phénol ou de crésol dont ont été éliminés m groupes hydroxyliques.

6. Composés de formule I selon la revendication 4 dans lesquels m = 2 et $R^4$ est un radical $-C_pH_{2p}-$, p étant un entier de 2 à 15, un radical cycloaliphatique en $C_5$–$C_{12}$, un radical aromatique en $C_6$–$C_{12}$ ou un radical de formule II.

7. Composés de formule I selon la revendication 1 dans lesquels $R^4$ provient d'un polyol choisi parmi les suivants:

$HO(CH_2)_6OH$, $HO(CH_2)_{12}OH$, 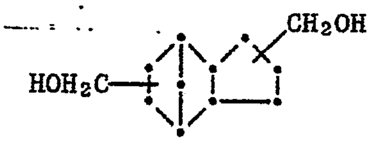 , 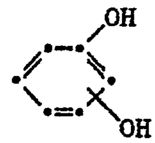 ,

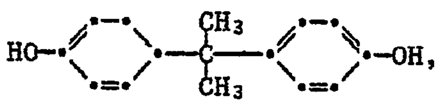 , 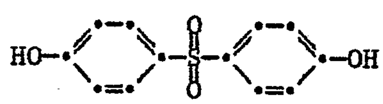 ,

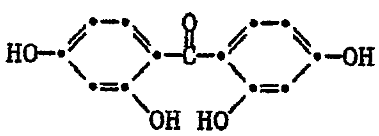 , 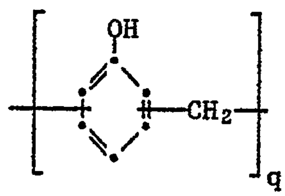 und

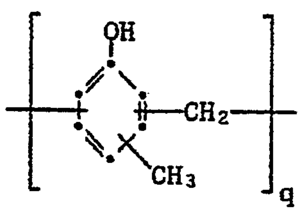 ,

q désignant un nombre entier de 3 à 20.

8. Procédé de préparation des composés de formule I selon la revendication 1 par réaction d'un chlorure d'acide de formule III

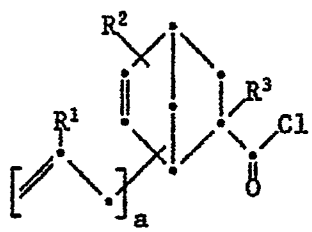 (III)

avec un polyol de formule IV

$R^4 (OH)_m$

en présence d'une amine tertiaire ou d'un carbonate de métal alcalin dans une proportion au moins équivalente au chlorure d'acide, les divers symboles des formules ayant les significations qui ont été données à la revendication 1.

9. Matières polymères que l'on obtient en chauffant un composé de formule I de la revendication 1 ou un mélange de plusieurs de ces composés pendant 5 à 30 heures à une température de 150 à 300°C.

10. Matières polymères selon la revendication 9, caractérisées en ce qu'on les obtient en chauffant pendant 10 à 25 heures entre 180 et 250°C un composé de formule I dont a = 1, m = 2, $R^1$, $R^2$ et $R^3$ sont l'hydrogène et $R^4$ est le radical.